Europäisches Patentamt

European Patent Office

Office européen des brevets

(19)

(11) **EP 1 362 007 B1**

(12) **FASCICULE DE BREVET EUROPEEN**

(45) Date de publication et mention
de la délivrance du brevet:
**11.08.2004 Bulletin 2004/33**

(51) Int Cl.⁷: **C01B 33/40**, B01J 6/00,
F26B 17/10, C04B 14/10

(21) Numéro de dépôt: 02703663.1

(22) Date de dépôt: **06.02.2002**

(86) Numéro de dépôt international:
**PCT/FR2002/000456**

(87) Numéro de publication internationale:
**WO 2002/066376 (29.08.2002 Gazette 2002/35)**

(54) **PROCEDE ET INSTALLATION DE TRAITEMENT DE DESHYDROXYLATION DE SILICATE D'ALUMINIUM**

VERFAHREN UND VORRICHTUNG ZUR DEHYDROXYLATIONSBEHANDLUNG VON ALUMINOSILIKAT

METHOD AND INSTALLATION FOR THE DEHYDROXYLATION TREATMENT OF ALUMINIUM SILICATE

(84) Etats contractants désignés:
**AT BE CH CY DE DK ES FI FR GB GR IE IT LI LU MC NL PT SE TR**

(30) Priorité: **20.02.2001 FR 0103094**

(43) Date de publication de la demande:
**19.11.2003 Bulletin 2003/47**

(73) Titulaire: **Saint-Gobain Materiaux de Construction S.A.S -SGMC S.A.S. F-92400 Courbevoie (FR)**

(72) Inventeur: **CADORET, Gaël G-75007 Paris (FR)**

(74) Mandataire: **Cardin, Elise et al Saint-Gobain Recherche 39, quai Lucien Lefranc 93300 Aubervilliers Cedex (FR)**

(56) Documents cités:
WO-A-90/05586          GB-A- 646 732
GB-A- 663 371          GB-A- 1 164 314
GB-A- 2 247 306        US-A- 2 535 570
US-A- 4 962 279        US-A- 5 792 251

**Description**

La présente invention se rapporte au traitement de particules minérales. Elle concerne plus particulièrement un procédé de traitement de déshydroxylation de silicate d'aluminium, qui peut être contenu notamment dans des argiles, pour lui conférer ou lui augmenter sa réactivité en tant qu'additif ou qu'addition (à caractère pouzzolanique) dans des matrices de ciment, béton ou autre.

Il est connu d'ajouter du silicate d'aluminium sous forme de métakaolin dans des compositions de ciment, mortier ou béton, en tant qu'additif susceptible de réagir avec la chaux libérée par l'hydratation du ciment, en particulier dans des ciments renforcés de fibres de verre où la chaux libérée au cours du vieillissement du ciment a un effet néfaste sur les propriétés de renforcement.

Ce silicate d'aluminium sous forme réactive peut être obtenu par un traitement de calcination thermique de kaolin ou de kaolinite, généralement à partir d'un matériau de départ argileux. La réaction endothermique de déshydroxylation est la suivante :

$$Al_2O_3.2\ SiO_2.2\ H2O \rightarrow Al_2O_3.2\ H_2O + 2\ H_2O\ (\approx\text{- }418\ \text{Joules/gramme})$$

Elle a lieu à une température d'environ 500 à 650°C selon la nature de l'argile de départ.

La mise en oeuvre industrielle de ce traitement doit répondre à deux impératifs : traiter la matière argileuse à coeur pour assurer la transformation de tout le kaolin en métakaolin, sans que la température de la matière traitée n'atteigne la température de dégradation du métakaolin, qui peut se transformer (au cours d'une réaction exothermique) à environ 900°C en une forme cristallisée non réactive telle que la mullite ou la crystobalite.

Dans une technique industrielle connue, l'argile sous forme de boulettes est traitée dans un four à plateaux, où chaque étage chauffé par des brûleurs à une température donnée comprend un plateau sur lequel est déposée une épaisseur substantielle d'argile et des bras racleurs qui assurent l'exposition de l'argile pendant la durée souhaitée à la température de l'étage et qui dirigent la matière traitée sur un plateau vers le plateau suivant. Typiquement, ces installations imposent un gradient de température croissant dans le sens de circulation de l'argile, de l'ordre de 500 à 750°C au niveau des plateaux. Pour atteindre ces températures, les brûleurs chauffent parfois localement à des températures bien supérieures, et les organes du four, notamment parois et bras, soumis à de fortes sollicitations, doivent être réalisés en des matériaux réfractaires ayant une bonne tenue en température et/ou doivent être pourvus d'un système de refroidissement. Par ailleurs, le temps de séjour des matières dans le four est très long et implique une consommation d'énergie très importante, enfin les fines particules produites par attrition des boulettes sont emmenées par les gaz de cuisson, nécessitant de ce fait un traitement de dépoussiérage des fumées..

Dans un autre technique connue, dite de « calcination flash », des particules d'argile sont soumises à des gradients de température considérables, de façon à atteindre quasi-instantanément la température de traitement. En pratique, les particules d'argile sont placées dans une ambiance dont la température peut atteindre 900 à 1000°C, voire plus, pendant un temps très bref, de sorte que les échanges thermiques amènent la particule à la température souhaitée de l'ordre de 500-600°C. Suivant certains types de réalisation, le four de calcination comprend une enceinte dans laquelle est installé un brûleur qui produit la température désirée. Ce type de four présente le risque que des particules viennent en contact avec la flamme du brûleur et dépassent la température de traitement souhaitée. Un autre type de four de calcination flash, décrit notamment dans US-A-6 139 313, comprend une chambre de traitement par un courant gazeux toroïdal, où un plasma de très haute température est formé par injection de combustible dans un courant de gaz chaud créé en amont de la chambre de traitement. Les organes critiques du four sont ici aussi soumis à de très hautes températures, ce qui nécessite des dispositifs de refroidissement compliqués.

La présente invention vise à fournir un procédé de traitement amélioré par calcination, qui assure un rendement de transformation satisfaisant, sans nécessiter une installation compliquée ni des matériaux coûteux.

Ce but a été atteint selon l'invention par un procédé de traitement de déshydroxylation de silicate d'aluminium, dans lequel on soumet des particules renfermant le silicate d'aluminium à une température d'au moins 500°C, caractérisé en ce que les particules sont sous forme d'une poudre sèche et en ce que l'on transporte la poudre sèche dans un courant de gaz à une température de 600 à 850°C, pendant une durée suffisante pour atteindre le degré de déshydroxylation souhaité.

L'invention a révélé que le matériau renfermant le silicate d'aluminium, lorsqu'il est divisé sous forme pulvérulente, réagit de manière étonnamment rapide dans le gaz de transport dont la température est toutefois bien inférieure aux températures usuelles d'un traitement de calcination « flash », de sorte que l'invention fournit un traitement thermique de déshydroxylation de mise en oeuvre peu coûteuse tant au niveau de l'énergie requise que des matériaux servant à réaliser les dispositifs de traitement.

Pour fixer les idées, la poudre sèche a généralement une granulométrie inférieure ou égale à 100 μm, c'est-à-dire que toutes les particules qui la composent ont une taille caractérisée par des dimensions (diamètre ou diamètre apparent) inférieures ou égales à 100μm. De préférence, elle est essentiellement composée de particules de dimensions inférieures ou égales à 80 μm. Elle comprend avantageusement au moins 60% en poids de particules de dimension inférieure à 20 μm et de préférence une quantité faible (par exemple inférieure ou égale à 5%) de particules de dimensions supérieures à 40 microns (95 % < à 40 microns).

De manière avantageuse, la poudre est formée à partir d'une pâte de base hydratée renfermant le silicate d'aluminium de la façon suivante : on réduit la pâte de base en fragments et on désagglomère les fragments de pâte de base par action mécanique en présence d'un gaz chaud à une température de l'ordre de 500°C à 800°C.

Selon l'invention, il est également apparu de manière inattendue qu'une simple opération mécanique de broyage, malaxage, pétrissage, ou similaire, conduite en présence d'un gaz chaud de température supérieure ou égale à 500°C, que l'on envisagerait usuellement pour sécher un matériau hydraté, permet non seulement d'évaporer l'eau d'hydratation de la pâte de base, mais en plus d'amorcer la séparation de l'eau liée du silicate d'aluminium en formant du métakaolin. Cette opération est achevée en transportant les produits pulvérulent par du gaz chaud dont la température (500 à 850 °C) est précisément définie de façon à d'une part permettre un avancement suffisant de la réaction (température et temps de transport) et d'autre part à ne pas former de produits cristallisés stables en présence de chaux (limite supérieure de la température).

L'action mécanique envisagée selon l'invention est de préférence une action de nature à séparer les particules constituant la matière minérale de la pâte de base pour conférer au matériau sec sa répartition granulométrique « naturelle ». C'est pourquoi on emploie ici le terme de désagglomération. De même le terme broyage, lorsqu'il est utilisé dans la présente description, comprend tout type d'action « douce », notamment de type attrition, et n'est pas limité à une opération de nature à réduire la granulométrie d'un matériau en cassant ses particules constitutives.

La température du gaz chaud utilisé dans l'étape de désagglomération est choisie inférieure à 800°C pour éviter une transformation ultérieure du métakaolin en une forme non réactive, mais on la souhaite la plus élevée possible pour un séchage rapide de la pâte de base hydratée. La température peut être choisie à l'intérieur de la plage en fonction de la teneur en eau et des caractéristiques propres de la matière première, liées à sa composition et donc au gisement ou à la source utilisée. La température précise de transformation d'un kaolin en métakaolin peut être déterminée en soumettant la matière première à une analyse thermique différentielle (ATD), le pic de transformation en métakaolin étant situé généralement entre 500 et 550 ou 600°C. On peut choisir avantageusement la température du gaz chaud de l'ordre de 600 à 750°C, notamment de 650 à 700°C. Il s'agit de la température des gaz après mélange et introduction des particules argileuses. Il est donc intéressant que l'alimentation en gaz chaud soit réalisé à la température la plus proche de la température de transformation, cette température devant être toutefois la plus élevée possible (850-900°C) tout en étant inférieure au seuil correspondant à la réaction de transformation en mullite.

Les conditions de l'étape de désagglomération selon l'invention permettent une élimination substantielle de l'eau présente dans la pâte de base hydratée. Typiquement, à partir d'une pâte de base ayant une teneur en eau inférieure à 30% en poids, notamment de l'ordre de 15 à 30% en poids, la poudre sèche désagglomérée a généralement une teneur résiduelle en eau de l'ordre de 0 à 1% en poids.

Avantageusement, on réalise la désagglomération en forçant les fragments de pâte et le gaz chaud entre des organes de broyage. On produit ainsi une surface de contact maximale entre la pâte et le gaz chaud qui favorise l'échange de chaleur et permet un séchage quasi instantané.

Grâce à ces conditions de séchage, le matériau de la pâte de base est réduit en poudre aux dimensions de ses particules constitutives. En général, la poudre sèche a une granulométrie inférieure ou égale à 100 μm, de préférence à 80 μm. Elle comprend avantageusement au moins 60% en poids de particules de dimension inférieure à 20 μm et une quantité faible (par exemple inférieure ou égale à 5%) de particules de dimensions supérieures à 40 microns.

Selon la matière première utilisée, notamment lorsqu'il s'agit d'une matière naturelle telle que de l'argile, l'étape de désagglomération peut être suivie d'une étape de séparation de particules grossières, notamment par un cyclone, telles que du sable à l'issue de laquelle on récupère la poudre sèche qui fera l'objet du traitement thermique.

Selon la matière première utilisée, on peut obtenir une poudre sèche renfermant du silicate d'aluminium pouvant être partiellement déshydroxylée lors de l'opération de broyage - séchage. Le degré de déshydroxylation peut être apprécié par la réactivité à l'essai « Chapelle » qui consiste à évaluer la quantité de CaO potentiellement consommable par la matière minérale, ceci définissant la pouzzolanate de l'addition minérale. Dans cet essai, décrit par R. Largent dans le Bulletin de Liaison des Laboratoires des Ponts et Chaussées, n°93, janvier-février 1978, pages 63-64, on place en contact pendant seize heures au voisinage de l'ébullition, la matière minérale et de la chaux en suspension dans l'eau. Après refroidissement, on dose la chaux qui n'a pas réagi. Le résultat est exprimé en g pour 1 g de matière minérale.

Pour atteindre un degré de déshydroxylation élevé avec une réactivité à l'essai Chapelle d'au moins environ 0,7 à 0,8, l'invention prévoit une étape de traitement thermique en transportant la poudre sèche dans un courant de gaz chaud à une température de 600 à 850°C, pendant une durée suffisante pour atteindre le degré de déshydroxylation souhaité, sans que la température de la particule n'atteigne la zone de transformation minérale en mullite.

L'analyse des courbes fournies par l'ATD permet d'identifier et de quantifier précisément tant les températures de réaction (détermination des températures minimum et maximum) que la cinétique de transformation du kaolin en métakaolin, qui est utile pour déterminer selon l'invention le couple température_temps de transport du kaolin sous forme de poudre. La température du gaz chaud détermine (en utilisant les résultats de l'ATD) le temps de transport (contact entre le gaz et la poudre) nécessaire pour transformer le kaolin en métakaolin. Ainsi pour un kaolin étudié, le temps de transport nécessaire pour atteindre 80% de déshydroxylation est de 13 secondes pour une température de 600 °C alors qu'il est avantageusement réduit à 0,1 seconde pour des gaz à environ 800°C . Il est notable que les conditions de traitement thermique des particules élémentaires du kaolin placées dans un flux dilué sont sensiblement différentes de celles qui sont réalisées dans les appareils de mesure de type ATD/ATG où l'échantillon est mis en petit paquet. Cette disposition géométrique réduit la vitesse des échanges thermiques et par ailleurs cette cinétique est également modifiée par la présence d'une humidité relative plus importante dans les creusets de l'appareillage que celle prévalant dans le flux dilué.

La poudre qui doit être soumise au traitement à chaud peut être traitée directement après la désagglomération, si celle-ci est effectuée sur le site du traitement thermique, ou bien après une étape intermédiaire de stockage sur site ou dans une installation séparée de préparation de la poudre.

Dans le premier cas, on peut récupérer la poudre avec le courant de gaz chaud à l'issue de la désagglomération pour transporter la poudre dans la suite du traitement à chaud, avec un éventuel apport de chaleur supplémentaire, sous forme d'un courant de gaz chaud accessoire ou d'autres moyens de chauffage pour porter le gaz à une température de 600 à 850°C.

Dans le deuxième cas, la poudre est introduite dans un second courant de gaz chaud à une température de 600 à 850°C.

Dans une variante ou l'autre, on peut avantageusement contrôler la température du gaz chaud pendant le transport de la poudre sèche. Le contrôle peut consister à imposer un gradient de température au gaz et à la poudre, ou bien au contraire à maintenir constante la température du gaz chaud pendant le transport de la poudre sèche.

En fin de traitement, on peut récupérer la poudre sèche déshydroxylée par divers moyens, notamment par filtration.

L'invention a également pour objet une installation pour le traitement de déshydroxylation de silicate d'aluminium, caractérisée en ce qu'elle comprend une conduite alimentée par un courant de gaz chaud à une température de 600 à 850°C, des moyens pour introduire dans la conduite une poudre sèche renfermant le silicate d'aluminium et des moyens pour transporter la poudre sèche dans cette conduite.

Suivant d'autres caractéristiques :

- l'installation comprend des moyens pour déchiqueter en fragments une pâte de base hydratée renfermant le silicate d'aluminium, un broyeur-sécheur qui désagglomère les fragments de pâte de base par action mécanique en présence d'un gaz chaud à une température de 500°C à 800°C, des moyens pour collecter une poudre sèche en aval du broyeur-sécheur ;
- le broyeur-sécheur comporte une zone de broyage avec des organes de broyage et des passages pour le gaz chaud dans ladite zone de broyage ;
- les organes de broyages comprennent au moins une paire de disques parallèles portant des doigts en saillie sur leurs surfaces en vis-à-vis, et en ce que les passages pour le gaz chaud sont les espaces entre les doigts des disques ;
- l'installation comprend des moyens de séparation, tels qu'un cyclone, en sortie du broyeur-sécheur ;
- l'installation comprend des moyens de stockage intermédiaire entre le broyeur-sécheur et la conduite ;
- la conduite est alimentée en gaz chaud par un brûleur dont la flamme est contenue hors de la conduite ;
- la conduite est équipée de moyens extérieurs de chauffage, tels que des résistances chauffantes et/ou un manchon chauffant ;
- les moyens de chauffage sont constitués par au moins une arrivée de gaz qui par combustion au niveau d'une paroi de l'installation permet de maintenir une température de paroi voisine de 800° C
- l'installation comprend, en aval, des moyens de collecte de poudre par filtration.

D'autres détails et caractéristiques de l'invention ressortiront de la description détaillée qui va suivre d'un exemple de mise en oeuvre de l'invention, faite en regard des dessins annexés, sur lesquels :

- la figure 1 représente un schéma d'une installation selon l'invention ;
- la figure 2 représente une vue schématique en coupe d'un broyeur-sécheur susceptible de faire partie de l'installation de la figure 1 ;
- la figure 3 présente en détail les organes de broyage du broyeur-sécheur de la figure 2.

Dans cet exemple, le procédé selon l'invention est appliqué au traitement d'argile kaolinique, pour convertir le sulfate d'aluminium en métakaolin.

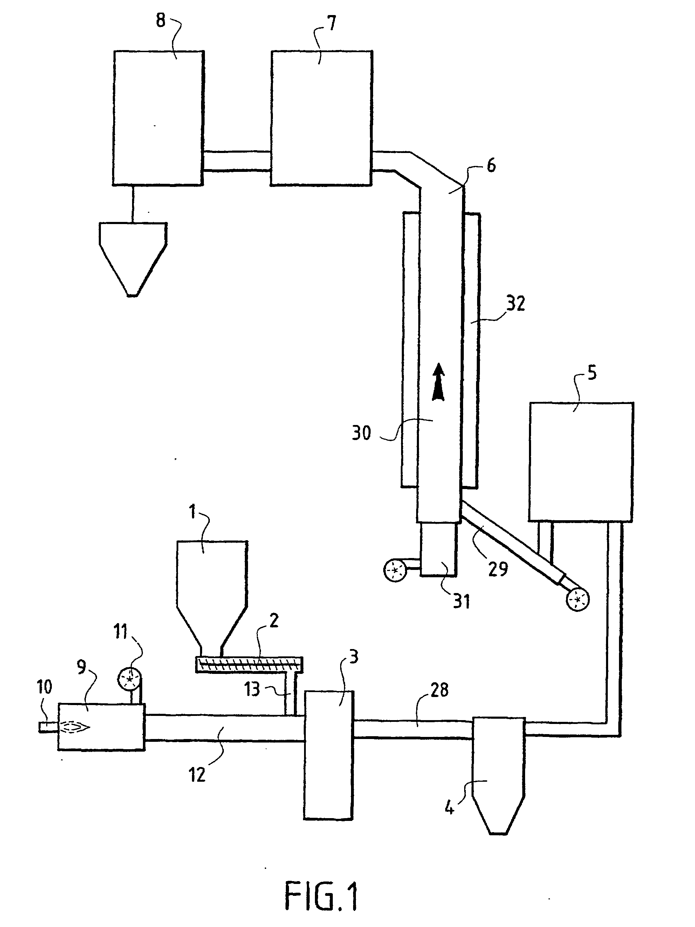

A cet effet, on peut utiliser l'installation de la figure 1. On précise que la représentation de la figure 1 est schématique, que les éléments en sont pas représentés à l'échelle, et qu'elle ne limite en rien l'invention, en particulier en ce qui concerne l'arrangement des différents postes ou la disposition ou l'orientation des lignes de circulation des matières.

Cette installation comprend essentiellement une trémie 1 de stockage de l'argile, une déchiquetteuse 2, un broyeur-sécheur 3, éventuellement un cyclone de séparation 4, éventuellement une capacité de stockage 5, une conduite de transport 6, un poste de refroidissement 7 et un filtre 8 de collecte de poudre.

L'argile contenue dans la trémie 1 se présente sous la forme telle qu'elle est produite à l'extraction du gisement, généralement sous forme de blocs d'une pâte de base hydratée dont les dimensions peuvent atteindre la dizaine de centimètres. A l'état initial, elle présente une teneur en eau qui peut aller par exemple de 15 à 30 % en poids.

La déchiquetteuse 2 délivre des fragments de pâte de base de dimensions réduites, notamment de l'ordre de quelques centimètres, dans le broyeur-sécheur 3, par exemple par l'intermédiaire d'une vis d'Archimède.

Le broyeur-sécheur 3 est alimenté par un courant de gaz chaud produit en 9 par un brûleur 10 et un ventilateur 11, le courant étant transporté vers le broyeur-sécheur par une conduite 12. La flamme du brûleur 10 est réglée pour que la température du courant de gaz chaud dans la conduite 12 soit de l'ordre de 500 à 800°C, de préférence de l'ordre de 600 à 750°C, notamment de 650 à 700°C.

Les fragments de pâte de base sont introduits dans le courant de gaz chaud en 13 à un rythme contrôlé, par exemple par la rotation de la vis, juste avant que la conduite 12 ne rejoigne le broyeur-sécheur 3.

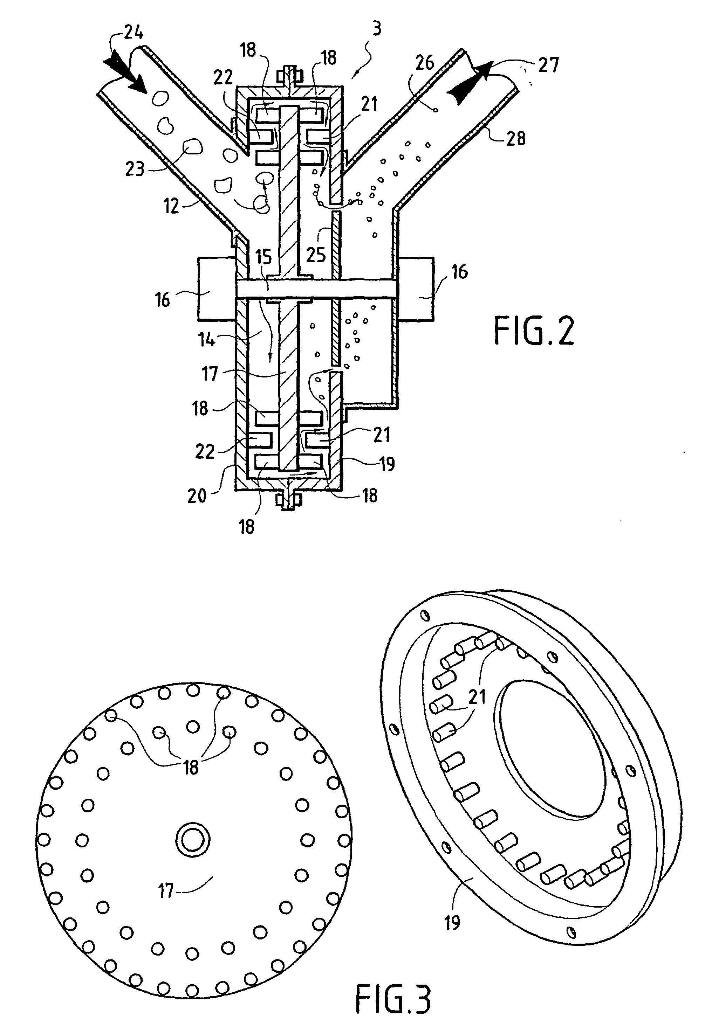

L'étape de désagglomération sera mieux comprise en regard des figures 2 et 3 qui représentent respectivement un type de broyeur-sécheur utilisable selon l'invention, vu en coupe selon un plan vertical dans l'axe de la ligne de la partie de l'installation représentée au bas de la figure 1, et un détail de ce broyeur-sécheur vu en perspective éclatée. Ce type de broyeur-sécheur est commercialisé notamment par CMI-HANREZ.

Le broyeur se compose essentiellement d'une enceinte 14 à l'intérieur de laquelle tourne un arbre 15 entraîné par des moyens 16 indiqués schématiquement, et qui porte au moins un disque 17 pourvue d'au moins une série de doigts 18 saillant sur au moins une face plane du disque et disposés de préférence en anneau suivant la périphérie du disque 17. L'enceinte comporte deux parois en forme de disque 19,20 parallèles au disque 17 et qui portent sur leur surface en vis-à-vis des faces planes du disque 17 au moins une série de doigts 21,22 disposés en anneau suivant la périphérie des disques 19,20. Les séries de doigts sont arrangées de manière concentrique et leur longueur est choisie pour former des chicanes entre les doigts de deux séries voisines.

En fonctionnement, la rotation du disque 17 entraîne les fragments 23 de pâte de base vers la périphérie de l'enceinte 14. Sur la première face du disque 17, les fragments passent à travers les chicanes formées entre les doigts 18 et 22, puis passent le long de la périphérie de l'enceinte 14 vers l'autre face du disque 17, et sur l'autre face de ce dernier, ils passent à travers les chicanes formées entre les doigts 18 et 21. Ce parcours entre les doigts de broyage très rapprochés a pour effet de pétrir ou de triturer la pâte d'argile.

Le courant de gaz chaud 24 suit le même parcours indiqué par les flèches et enveloppe et pénètre les fragments de pâte de base, avec une surface d'échange considérable entre le gaz chaud et la pâte. Cette grande surface d'échange permet une évaporation très rapide, quasi-instantanée, de l'eau d'hydratation de l'argile, qui se sépare progressivement par attrition en particules de taille toujours plus petite.

Dans la paroi en forme de disque 19 est aménagé un diaphragme 25 qui permet aux particules de petite taille de quitter l'enceinte 14 alors que des particules de plus grandes dimensions sont renvoyées vers les chicanes pour poursuivre la désagglomération par attrition. On peut donc régler le dispositif pour récupérer en aval du diaphragme 25 une poudre 26 dont la répartition granulométrique est la granulométrie naturelle des lamelles d'argile. Typiquement, la poudre 26 est de dimensions inférieures à 100 μm et peut même comprendre au moins 95% de particules de dimension inférieure à 40 μm.

A ce stade, la poudre ne renferme généralement plus que 0 à 1 % en poids d'eau. Elle a une réactivité à la chaux selon l'essai Chapelle sensiblement inchangée par rapport au stade initial, généralement inférieure à 0,5 g pour 1 g .

La poudre 26 et le courant de gaz 27 qui a été refroidi pendant l'opération de désagglomération (sa température peut baisser à 100°C mais doit être maintenue au-dessus de son point de rosée) sont récupérés via une conduite 28, qui peut être dirigée vers un cyclone pour séparer éventuellement les particules de la poudre en fonction de leur taille, par exemple pour éliminer des grains de sable ou les particules agglomérées de dimension supérieure à 100 ou 40 microns.

La poudre 26 transportée par le courant de gaz 27 peut être stockée en 5, avec évacuation du gaz de transport, ou envoyée directement vers l'étape suivante de traitement thermique.

Sur la figure 1, la poudre est prélevée du silo 5 et acheminée via une conduite 29 par exemple dans un courant de gaz vecteur, vers la conduite de transport 6 dans laquelle circule un courant gazeux 30 produit par un brûleur 31, situé en amont de la conduite 6 de manière à ce que la flamme du brûleur ne puisse pas s'étendre dans la zone d'introduction de la poudre. La flamme du brûleur 31 est réglée pour que la température du courant de gaz chaud 30 dans la conduite 6 soit de l'ordre de 600 à 850°C, de préférence de l'ordre de 600 à 800°C. Le gaz chaud peut être comme ici un gaz de combustion, mais pourrait être tout autre type de gaz, air ou autre, chauffé par tout moyen connu.

Afin de perturber le moins possible, l'équilibre thermique dans la conduite, la poudre peut être acheminée dans la conduite 29 par un courant de gaz chaud.

La conduite 6 peut être équipée de moyens de contrôle et de régulation de la température des gaz, par exemple pour imposer un gradient de température le long de la conduite ou au contraire pour maintenir la température dans une faible plage de variations. La conduite 6 sera avantageusement pourvue de moyens de chauffage, car la réaction de déshydroxylation du kaolin est endothermique et fait baisser la température du gaz de traitement et donc celle des particules.

Ainsi, la conduite représentée à la figure 1 est équipée d'un manchon chauffant 32 qui peut être constitué par une double enveloppe à l'intérieur de laquelle circule un fluide de chauffage, notamment des gaz de combustion. En variante ou en complément, on peut prévoir des moyens de chauffage électriques.

L'opération de déshydroxylation étant endothermique, il peut être intéressant d'un point de vue du rendement thermique, de réaliser un apport énergétique au niveau des particules transportées dans le flux. Cet apport énergétique peut être réalisé notamment par rayonnement électrique ou par une combustion gazeuse ou liquide d'un combustible. (S'il s'agit d'un gaz, celui-ci s'auto-allume au contact de la paroi)

La conduite est avantageusement dotée d'une isolation extérieure non représentée pour lutter contre les déperditions thermiques.

La conduite 6 est disposée de toute manière connue permettant la fluidisation des particules de poudre, de préférence verticalement, et dimensionnée pour permettre un temps de séjour suffisant de la poudre avec le courant de gaz 30. Ce dimensionnement dépend entre autres de la matière traitée, dont la granulométrie fixe la vitesse de fluidisation qui est la vitesse minimale du courant de gaz 30 pour transporter la poudre à travers toute la conduite. A titre d'illustration la vitesse du gaz 30 pour le traitement de l'argile peut être de l'ordre de 10 m/s.

Le temps de séjour de la poudre dans la conduite dépend, lui, du degré de déshydroxylation souhaité et de la température du gaz 30, et sera donc adapté au cas par cas par le spécialiste. Un temps de séjour de 0,1 à 0,2 secondes à 800°C est généralement suffisant pour augmenter notablement la réactivité à l'essai Chapelle, avantageusement d'au moins 0,1 g, et notamment de l'ordre de 0,7 g à 0,8 g.

A partir d'une argile kaolinique ayant déjà, en sortie du broyeur-sécheur, la capacité de fixer de la chaux selon l'essai Chapelle avec une réactivité par exemple de l'ordre de 0,5 g, on a pu vérifier que le traitement dans la conduite 6 permet de parachever la déshydroxylation en augmentant la réactivité de la poudre. Le traitement dans la conduite 6 peut aussi être utilisé pour conférer de la réactivité à une matière initialement très peu réactive.

Ainsi, dans un autre essai, un kaolin en poudre commercialisé par la société SOKA sous la marque SIALITE, dont la réactivité Chapelle initiale est très faible (de l'ordre de 45 mg de CaO par gramme), a été traité par un gaz à 800°C forcé à une vitesse de 10 m/s dans une conduite de 1,7 m de long, le degré de déshydroxylation a été tel que la réactivité Chapelle était de 307 mg pour 1 gramme de matière et pour une conduite de 5,1 m de long, il a été atteint une réactivité de 0,7 pour 1 gramme de matière sèche.

En sortie de la conduite, la poudre 26 et le gaz 30 sont toujours à une température élevée, et il peut être souhaitable de les refroidir avant de procéder à la séparation de la poudre. C'est pourquoi, l'installation comprend un échangeur de chaleur 7 relié à la sortie de la conduite 6 en amont du filtre 8 de séparation de la poudre déshydroxylée.

Un circuit de recyclage de gaz chaud avec possibilité de réchauffage peut être prévu pour améliorer le rendement thermique ou énergétique de l'installation.

Bien que décrite plus particulièrement en référence au traitement d'une argile kaolinique, l'invention s'applique de manière générale au traitement de toute matière renfermant du silicate d'aluminium.

**Revendications**

1. Procédé de traitement de déshydroxylation de silicate d'aluminium, dans lequel on soumet des particules renfermant le silicate d'aluminium à une température d'au moins 500°C, **caractérisé en ce que** les particules sont sous forme d'une poudre sèche et **en ce que** l'on transporte la poudre sèche (26) dans un courant de gaz (30) à une température de 600 à 850°C pendant une durée suffisante pour atteindre le degré de déshydroxylation souhaité.

2. Procédé selon la revendication 1, **caractérisé en ce que** la poudre est formée à partir d'une pâte de base hydratée renfermant le silicate d'aluminium de la façon suivante :

   - on réduit la pâte de base en fragments (23),
   - on désagglomère les fragments (23) de pâte de base par action mécanique (en 3) en présence d'un gaz chaud (24) à une température de 500°C à 800°C, pour former la poudre sèche (26).

3. Procédé selon la revendication 2, **caractérisé en ce que** la pâte de base a une teneur en eau inférieure à 30% en poids, et **en ce que** la poudre sèche a une teneur résiduelle en eau de l'ordre de 0 à 1 % en poids.

4. Procédé selon l'une quelconque des revendications précédentes, **caractérisé en ce que** la poudre sèche a une granulométrie inférieure ou égale à 100 μm, de préférence à 80 μm.

5. Procédé selon l'une quelconque des revendications 2 à 4, **caractérisé en ce que** l'on réalise la désagglomération en forçant les fragments (23) de pâte et le gaz chaud (24) entre des organes de broyage (18,21,22).

6. Procédé selon l'une quelconque des revendications 2 à 5, **caractérisé en ce que** l'étape de désagglomération est suivie d'une étape de séparation de particules grossières (en 4) à l'issue de laquelle on récupère la poudre sèche.

7. Procédé selon l'une quelconque des revendications précédentes, **caractérisé en ce que** l'on stocke la poudre sèche (en 5) avant de la transporter (en 6) dans le courant de gaz chaud.

8. Procédé selon l'une quelconque des revendications précédentes, **caractérisé en ce que** l'on contrôle la température du gaz chaud pendant le transport de la poudre sèche.

9. Procédé selon la revendication 8, **caractérisé en ce que** l'on maintient sensiblement constante la température du gaz chaud pendant le transport de la poudre sèche.

10. Procédé selon l'une quelconque des revendications précédentes, **caractérisé en ce que** l'on récupère la poudre sèche déshydroxylée par filtration après refroidissement.

11. Procédé selon l'une quelconque des revendications précédentes, **caractérisé en ce que** la poudre sèche traitée a une réactivité Chapelle d'au moins 0,7 g pour 1 gramme.

12. Installation pour le traitement de déshydroxylation de silicate d'aluminium, **caractérisée en ce qu'**elle comporte une conduite (6) alimentée par un courant de gaz chaud (30) à une température de 600 à 850°C, des moyens pour introduire dans la conduite (6) une poudre sèche renfermant le silicate d'aluminium et des moyens (31) pour transporter la poudre sèche dans cette conduite, la conduite étant dimensionnée pour réaliser la déshydroxylation du silicate d'aluminium.

13. Installation selon la revendication 12, **caractérisée en ce qu'**elle comprend des moyens (2) pour déchiqueter en fragments (23) une pâte de basa hydratée renfermant le silicate d'aluminium, un broyeur-sécheur (3) qui désagglomère les fragments (23) de pâte de base par action mécanique en présence d'un gaz chaud (24) à une température de 500°C à 800°C, des moyens (28,8) pour collecter une poudre sèche (26) en aval du broyeur-sécheur

14. Installation selon la revendication 13, **caractérisée en ce que** le broyeur-sécheur (2) comporte une zone de broyage avec des organes de broyage (18,21,22) et des passages pour le gaz chaud dans ladite zone de broyage.

15. Installation selon la revendication 14, **caractérisée en ce que** les organes de broyages comprennent au moins deux disques parallèles (17,19,20) portant des doigts (18,21,22) en saillie sur leurs surfaces en vis-à-vis, et **en ce que** les passages pour le gaz chaud sont les espaces entre les doigts (18,21,22) des disques.

16. Installation selon l'une des revendications 12 à 15, **caractérisée en ce qu'**elle comprend des moyens de séparation (4), tels qu'un cyclone, en sortie du broyeur-sécheur (3).

17. Installation selon l'une des revendications 12 à 16, **caractérisée en ce qu'**elle comprend des moyens de stockage (5) intermédiaire entre le broyeur-sécheur (3) et la conduite (6).

18. Installation selon l'une des revendications 12 à 17, **caractérisée en ce que** la conduite (6) est alimentée en gaz chaud (30) par un brûleur (31) dont la flamme est contenue hors de la conduite.

19. Installation selon l'une des revendications 12 à 17, **caractérisée en ce que** la conduite (6) est équipée de moyens

**EP 1 362 007 B1**

extérieurs de chauffage, tels que des résistances chauffantes et/ou un manchon chauffant (32).

20. Installation selon l'une des revendications 12 à 18, **caractérisée en ce qu'**elle comprend, en aval, des moyens de collecte de poudre par filtration (8).

21. Installation selon la revendication 19, **caractérisée en ce que** les moyens extérieurs de chauffage sont constitués par un rayonnement électrique ou par une combustion gazeuse ou liquide d'un combustible.

**Patentansprüche**

1. Verfahren zur Dehydratisierung von Aluminiumsilicat, in welchem das Aluminiumsilicat umfassende Teilchen einer Temperatur von mindestens 500 °C ausgesetzt werden, **dadurch gekennzeichnet, dass** die Teilchen in Form eines trockenen Pulvers vorliegen, und dass das trockene Pulver (26) in einem Gasstrom (30) mit einer Temperatur von 600 bis 850 °C einen Zeitraum lang transportiert wird, der ausreicht, damit der gewünschte Dehydratisierungsgrad erreicht wird.

2. Verfahren nach Anspruch 1, **dadurch gekennzeichnet, dass** das Pulver aus einer hydratisierten Grundmasse, die das Aluminiumsilicat umfasst, auf folgende Weise gebildet wird:

   - Zerkleinerung der Grundmasse zu Bruchstückchen (23) und
   - Vereinzelung der Grundmassebruchstückchen (23) durch mechanische Einwirkung (in 3) in Anwesenheit eines heißen Gases (24) mit einer Temperatur von 500 bis 800 °C, um das trockene Pulver (26) zu bilden.

3. Verfahren nach Anspruch 2, **dadurch gekennzeichnet, dass** der Wassergehalt der Grundmasse weniger als 30 Gew.-% beträgt, und dass der Restwassergehalt des trockenen Pulvers etwa 0 bis 1 Gew.-% beträgt.

4. Verfahren nach einem der vorhergehenden Ansprüche, **dadurch gekennzeichnet, dass** die Korngröße des trockenen Pulvers gleich oder weniger als 100 µm und vorzugsweise als 80 µm beträgt.

5. Verfahren nach einem der Ansprüche 2 bis 4, **dadurch gekennzeichnet, dass** die Vereinzelung durchgeführt wird, indem die Grundmassebruchstückchen (23) und das Heißgas (24) zwischen Mahlorgane (18, 21, 22) geschickt werden.

6. Verfahren nach einem der Ansprüche 2 bis 5, **dadurch gekennzeichnet, dass** auf die Vereinzelungsstufe eine Stufe der Abtrennung (in 4) der großen Teilchen folgt, nach welcher das trockene Pulver gewonnen wird.

7. Verfahren nach einem der vorhergehenden Ansprüche, **dadurch gekennzeichnet, dass** das trockene Pulver (in 5) gelagert wird, bevor es (in 6) in den Heißgasstrom befördert wird.

8. Verfahren nach einem der vorhergehenden Ansprüche, **dadurch gekennzeichnet, dass** die Temperatur des Heißgases während des Transports des trockenen Pulvers kontrolliert wird.

9. Verfahren nach Anspruch 8, **dadurch gekennzeichnet, dass** die Heißgastemperatur während des Transports des trockenen Pulvers im Wesentlichen konstant gehalten wird.

10. Verfahren nach einem der vorhergehenden Ansprüche, **dadurch gekennzeichnet, dass** das dehydratisierte trockene Pulver nach Abkühlung durch Filtern gewonnen wird.

11. Verfahren nach einem der vorhergehenden Ansprüche, **dadurch gekennzeichnet, dass** die Chapelle-Reaktivität des behandelten trockenen Pulvers mindestens 0,7 g auf 1 Gramm beträgt.

12. Vorrichtung zur Dehydratisierung von Aluminiumsilicat, **dadurch gekennzeichnet, dass** sie eine Rohrleitung (6), durch welche ein Heißgasstrom (30) mit einer Temperatur von 600 bis 850 °C geleitet wird, Mittel, um in die Rohrleitung (6) ein das Aluminiumsilicat umfassendes trockenes Pulver zu schicken, und Mittel (31), um das trockene Pulver in dieser Rohrleitung zu transportieren, umfasst, wobei die Rohrleitung für die Dehydratisierung des Aluminiumsilicats ausgelegt ist.

8

**13.** Vorrichtung nach Anspruch 12, **dadurch gekennzeichnet, dass** sie Mittel (2) zur Zerkleinerung einer das Aluminiumsilicat umfassenden hydratisierten Grundmasse zu Bruchstückchen (23), einen Zerkleinerer-Trockner (3), der die Grundmassebruchstückchen (23) durch mechanische Einwirkung in Gegenwart eines Heißgases (24) mit einer Temperatur von 500 bis 800 °C vereinzelt, und Mittel (28, 8), um nach dem Zerkleinerer-Trockner ein trockenes Pulver (26) zu sammeln, umfasst.

**14.** Vorrichtung nach Anspruch 13, **dadurch gekennzeichnet, dass** der Zerkleinerer-Trockner (2) einen Mahlbereich mit Mahlorganen (18, 21, 22) und Durchlässen für das Heißgas im Mahlbereich umfasst.

**15.** Vorrichtung nach Anspruch 14, **dadurch gekennzeichnet, dass** die Mahlorgane mindestens zwei parallele Scheiben (17, 19, 20) umfassen, die auf ihren einander gegenüberliegenden Flächen vorstehende Finger (18, 21, 22) tragen, und dass die Durchlässe für das Heißgas Zwischenräume zwischen den Fingern (18, 21, 22) der Scheiben sind.

**16.** Vorrichtung nach einem der Ansprüche 12 bis 15, **dadurch gekennzeichnet, dass** sie nach dem Zerkleinerer-Trockner (3) Trennungsmittel (4) wie einen Zyklon umfasst.

**17.** Vorrichtung nach einem der Ansprüche 12 bis 16, **dadurch gekennzeichnet, dass** sie zwischen dem Zerkleinerer-Trockner (3) und der Rohrleitung (6) Mittel (5) für die Zwischenlagerung umfasst.

**18.** Vorrichtung nach einem der Ansprüche 12 bis 17, **dadurch gekennzeichnet, dass** die Rohrleitung (6) von einem Brenner (31), dessen Flamme sich außerhalb der Rohrleitung befindet, mit Heißgas (30) gespeist wird.

**19.** Vorrichtung nach einem der Ansprüche 12 bis 17, **dadurch gekennzeichnet, dass** die Rohrleitung (6) mit äußeren Beheizungsmitteln wie Heizwiderständen und/oder einem Heizmantel (32) ausgerüstet ist.

**20.** Vorrichtung nach einem der Ansprüche 12 bis 18, **dadurch gekennzeichnet, dass** sie danach Mittel zum Sammeln des Pulvers durch Filtern (8) umfasst.

**21.** Vorrichtung nach Anspruch 19, **dadurch gekennzeichnet, dass** die äußeren Beheizungsmittel aus einer elektrischen Strahlung oder der gasförmigen bzw. flüssigen Verbrennung eines Brennstoffs bestehen.

**Claims**

**1.** Aluminium silicate dehydroxylation treatment method, in which particles containing the aluminium silicate are subjected to a temperature of at least 500°C, **characterised in that** the particles are in the form of a dry powder and **in that** the dry powder (26) is transported in a flow of gas (30) at a temperature of 600° to 850°C for a sufficient period to reach the required degree of dehydroxylation.

**2.** Method according to Claim 1, **characterised in that** the powder is formed from a hydrated base paste containing the aluminium silicate in the following manner:

- the base paste is reduced to fragments (23),

- the base paste fragments (23) are disagglomerated by mechanical action (at 3) in the presence of a hot gas (24) at a temperature of 500°C to 800°C, in order to form the dry powder (26).

**3.** Method according to Claim 2, **characterised in that** the base paste has a water content of less than 30% by weight, and **in that** the dry powder has a residual water content of around 0 to 1% by weight.

**4.** Method according to any one of the preceding claims, **characterised in that** the dry powder has a granulometry of less than or equal to 100 µm, preferably 80 µm.

**5.** Method according to any one of Claims 2 to 4, **characterised in that** the disagglomeration is carried out by forcing the fragments (23) of paste and the hot gas (24) between grinding members (18, 21, 22).

**6.** Method according to any one of Claims 2 to 5, **characterised in that** the disagglomeration step is followed by a step of separating coarse particles (at 4) at the end of which the dry powder is recovered.

7.  Method according to any one of the preceding claims, **characterised in that** the dry powder is stored (at 5) before transporting (at 6) in the stream of hot gas.

8.  Method according to any one of the preceding claims, **characterised in that** the temperature of the hot gas is controlled during the transportation of the dry powder.

9.  Method according to Claim 8, **characterised in that** the temperature of the hot gas is kept substantially constant during the transportation of the dry powder.

10. Method according to any one of the preceding claims, **characterised in that** the dehydroxylated dry powder is recovered by filtration after cooling.

11. Method according to any one of the preceding claims, **characterised in that** the treated dry powder has a Chapelle reactivity of at least 0.7 g for 1 gram.

12. Installation for the dehydroxylation treatment of aluminium silicate, **characterised in that** it comprises a conduit (6) supplied with a stream of hot gas (30) at a temperature of 600° to 850°C, means for introducing into the conduit (6) a dry powder containing the aluminium silicate and means (31) for transporting the dry powder in this conduit, the conduit being sized so as to effect the dehydroxylation of the aluminium silicate.

13. Installation according to Claim 12, **characterised in that** it comprises means (2) for shredding into fragments (23) a hydrated base paste containing the aluminium silicate, a grinder/dryer (3) which disaggregates the base paste fragments (23) by mechanical action in the presence of a hot gas (24) at a temperature of 500°C to 800°C, means (28, 8) for collecting a dry powder (26) downstream of the grinder/dryer.

14. Installation according to Claim 13, **characterised in that** the grinder/dryer (2) comprises a grinding area with grinding members (18, 21, 22) and passages for the hot gas in the said grinding area.

15. Installation according to Claim 14, **characterised in that** the grinding members comprise at least two parallel discs (17, 19, 20) carrying fingers (18, 21, 22) projecting on their facing surfaces, and **in that** the passages for the hot gas are spaces between the fingers (18, 21, 22) on the discs.

16. Installation according to one of Claims 12 to 15, **characterised in that** it comprises separation means (4), such as a cyclone, at the discharge from the grinder/dryer (3).

17. Installation according to one of Claims 12 to 16, **characterised in that** it comprises intermediate storage means (5) between the grinder/dryer (3) and the conduit (6).

18. Installation according to one of Claims 12 to 17, **characterised in that** the conduit (6) is supplied with hot gas (30) by a burner (31) whose flame is contained outside the conduit.

19. Installation according to one of Claims 12 to 17, **characterised in that** the conduit (6) is equipped with external heating means, such as electric heating elements and/or a heating sleeve (32).

20. Installation according to one of Claims 12 to 18, **characterised in that** it comprises, downstream, means of collecting powder by filtration (8).

21. Installation according to Claim 19, **characterised in that** the external heating means consists of electric radiation or gaseous or liquid combustion of a fuel.

FIG.1

FIG.2

FIG.3